(19) **Europäisches Patentamt / European Patent Office / Office européen des brevets**

(11) **EP 1 386 421 B1**

(12) **EUROPEAN PATENT SPECIFICATION**

(45) Date of publication and mention of the grant of the patent:
**27.02.2008 Bulletin 2008/09**

(51) Int Cl.:
***H04B 7/04*** (2006.01)

(21) Application number: **02722602.6**

(22) Date of filing: **16.04.2002**

(86) International application number:
**PCT/IB2002/001355**

(87) International publication number:
**WO 2002/087107 (31.10.2002 Gazette 2002/44)**

(54) **RADIO COMMUNICATION SYSTEM**

FUNKKOMMUNIKATIONSSYSTEM

SYSTEME DE RADIOCOMMUNICATION

(84) Designated Contracting States:
**AT BE CH CY DE DK ES FI FR GB GR IE IT LI LU MC NL PT SE TR**

(30) Priority: **25.04.2001 GB 0110125**
**21.09.2001 GB 0122745**

(43) Date of publication of application:
**04.02.2004 Bulletin 2004/06**

(73) Proprietor: **Koninklijke Philips Electronics N.V.**
**5621 BA Eindhoven (NL)**

(72) Inventors:
• **BAKER, Matthew, P., J.**
**NL-5656 AA Eindhoven (NL)**
• **MOULSLEY, Timothy, J.**
**NL-5656 AA Eindhoven (NL)**
• **HUNT, Bernard**
**NL-5656 AA Eindhoven (NL)**

(74) Representative: **Damen, Daniel Martijn et al**
**Philips**
**Intellectual Property & Standards**
**P.O. Box 220**
**5600 AE Eindhoven (NL)**

(56) References cited:
**EP-A- 1 026 835**          **US-A- 5 193 109**
**US-A- 6 151 310**          **US-B1- 6 208 299**

## Description

Technical Field

The present invention relates to a radio communication system and further relates to primary and secondary stations for use in such a system and to a method of operating such a system. While the present specification describes a system with particular reference to the Universal Mobile Telecommunication System (UMTS), it is to be understood that the apparatus and methods disclosed are equally applicable to use in other mobile radio systems.

Background Art

In a radio communication system, radio signals typically travel from a transmitter to a receiver via a plurality of paths, each involving reflections from one or more scatterers. Received signals from the paths may interfere constructively or destructively at the receiver (resulting in position-dependent fading). Further, differing lengths of the paths, and hence the time taken for a signal to travel from the transmitter to the receiver, may cause inter-symbol interference.

It is well known that the above problems caused by multipath propagation can be mitigated by the use of multiple antennas at the receiver (receive diversity), which enables some or all of the multiple paths to be resolved. For effective diversity it is necessary that signals received by individual antennas have a low cross-correlation. Typically this is ensured by separating the antennas by a substantial fraction of a wavelength, although closely-spaced antennas may also be employed by using techniques disclosed in our International patent application WO 01/71843 (applicant's reference PHGB000033). By ensuring use of substantially uncorrelated signals, the probability that destructive interference will occur at more than one of the antennas at any given time is minimised.

Similar improvements may also be achieved by the use of multiple antennas at the transmitter (transmit diversity). Diversity techniques may be generalised to the use of multiple antennas at both transmitter and receiver, known as a Multi-Input Multi-Output (MIMO) system, which can further increase system gain over a one-sided diversity arrangement. As a further development, the presence of multiple antennas enables spatial multiplexing, whereby a data stream for transmission is split into a plurality of sub-streams, each of which is sent via many different paths. One example of such a system is described in United States patent 6,067,290, another example, known as the BLAST system, is described in the paper "V-BLAST: an architecture for realising very high data rates over the rich-scattering wireless channel" by P W Wolniansky et al in the published papers of the 1998 URSI International Symposium on Signals, Systems and Electronics, Pisa, Italy, 29 September to 2 October 1998.

The performance gains which may be achieved from a MIMO system may be used to increase the total data rate at a given error rate, or to reduce the error rate for a given data rate, or some combination of the two. A MIMO system can also be controlled to reduce the total transmitted energy or power for a given data rate and error rate.

One area in which MIMO techniques may be applied is a High-Speed Downlink Packet Access (HSDPA) scheme, which is currently being developed for UMTS and which may facilitate transfer of packet data to a mobile station at up to 4Mbps. In one proposed embodiment of HSDPA separate data streams are sent from respective antennas at a Base Station (BS), which data streams can in principle be received and decoded by a Mobile Station (MS) having at least as many antennas as there are data streams.

A problem with the use of a MIMO system for packet data transmission is the impact of differing radio link qualities on the communication system. For example, some of the data streams may have very poor quality radio links, and if all the data is combined this will degrade the performance of the other links and reduce overall system capacity.

US 6,151,310 discloses a time division multiple access base station for communicating with a plurality of mobile stations in a cellular communications system using a plurality of time division multiple access time slots including an antenna having an array of transmit antenna elements, a modulator, and a radio frequency switch. The radio frequency switch couples the first cellular radio signal to a first plurality of transmit antenna elements during the first time division multiple access time slot, and then couples the second and third cellular radio signals to respective second and third pluralities of transmit antenna elements during the second time division multiple access time slot.

Disclosure of Invention

An object of the present invention is to provide a radio communication system having improved performance.

According to a first aspect of the present invention there is provided a radio communication system comprising a primary station having at least two antennas and at least two secondary stations each having at least one antenna, wherein the primary station comprises means for transmitting respective communication channels between the primary station and first and second secondary stations from respective mutually exclusive subsets of the primary station's antennas, wherein the first and second secondary stations are in the coverage area of the primary station antennas in both subsets, wherein the respective channels are distinguished solely by the respective subsets of antennas, and wherein the first and second secondary stations each comprise means for estimating from the received signals the subset of signals comprising its respective communication channel.

By utilising different antennas on the primary station to transmit to different secondary stations, system capacity can be improved in situations where signals received by a secondary station from some of the primary station's antennas are of poor quality. In contrast to known beam-forming or space-division multiple access (SDMA) techniques, which use phased-arrays of antenna elements at the primary station to generate beams in the direction of particular secondary stations, the present invention requires no angular separation between secondary stations receiving signals from different primary station antennas.

The present invention enables a radio communication system that normally operates as a MIMO system to improve its system capacity in certain situations by using different base station antennas to address different secondary stations rather than having all the antennas address one secondary station. In a UMTS embodiment, simultaneous transmissions to different secondary stations from different antennas can be made using the same channelisation code, scrambling code, carrier frequency and timeslots, thereby improving the overall spectral efficiency of the system.

According to a second aspect of the present invention there is provided a primary station having at least two antennas for use in a radio communication system having at least two secondary stations, wherein means are provided for transmitting respective communication channels between the primary station and first and second secondary stations from respective mutually exclusive subsets of the primary station's antennas, wherein the first and second secondary stations are in the coverage area of the primary station antennas in both subsets, and wherein the respective channels are distinguished solely by the respective subsets of antennas.

According to a third aspect of the present invention there is provided a secondary station having at least one antenna for use in a radio communication system having respective communication channels between a primary station having at least two antennas, the secondary station and a further secondary station, wherein the communication channels are transmitted from respective mutually exclusive subsets of the primary station's antennas, wherein the secondary station and the further secondary station are in the coverage area of the primary station antennas in both subsets, wherein the respective channels are distinguished solely by the respective subsets of antennas, and wherein means are provided for estimating from the received signals the subset of signals comprising the secondary station's respective communication channel.

The secondary station may estimate the signals corresponding to its respective communication channel by treating signals from other subsets of the primary station's antennas, intended for other secondary stations, as noise. However, in a preferred embodiment the secondary station comprises means for resolving the signals comprising its respective communication channels separately from signals transmitted from primary station antennas not comprised in its respective subset of antennas.

According to a fourth aspect of the present invention there is provided a method of operating a radio communication system comprising a primary station having at least two antennas and at least two secondary stations each having at least one antenna, the method comprising the primary station transmitting respective communication channels between the primary station and first and second secondary stations from respective mutually exclusive subsets of the primary station's antennas, the first and second secondary stations both being in the coverage area of the primary station antennas in both subsets and the respective channels being distinguished solely by the respective subsets of antennas, the method further comprising each secondary station estimating from the received signals the subset of signals comprising its respective communication channel.

Brief Description of Drawings

Embodiments of the present invention will now be described, by way of example, with reference to the accompanying drawings, wherein:

Figure 1 is a block schematic diagram of an embodiment of a MIMO radio system;
Figure 2 is a block schematic diagram of an embodiment of a base station for a MIMO radio system which weights sub-stream signals before transmission;
Figure 3 is a graph showing the variation in channel capacity between two stations each having two antennas as the relative gain of the transmitting antennas is altered;
Figure 4 is a block schematic diagram of an embodiment of a radio system made in accordance with the present invention, in which different sub-streams are directed at different terminals; and
Figure 5 is a flow chart illustrating operation of a radio communication system made in accordance with the present invention.

In the drawings the same reference numerals have been used to indicate corresponding features.

Modes for Carrying Out the Invention

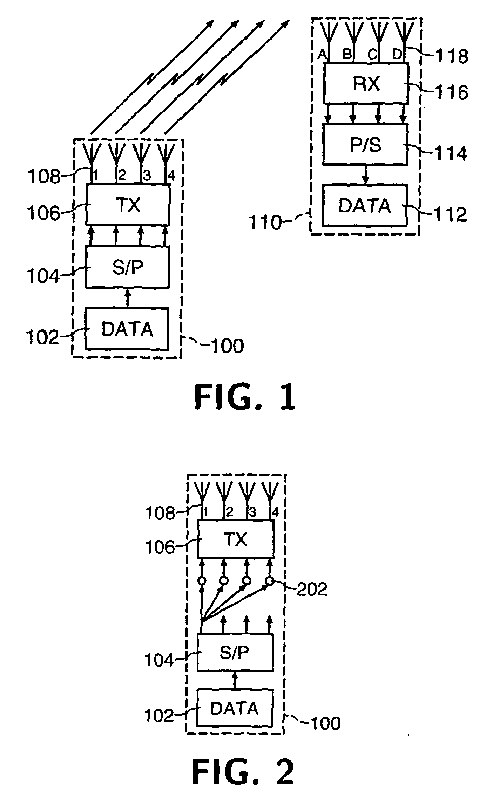

Figure 1 shows an example of a MIMO system for the transmission of downlink packet data from a primary station 100 to a secondary station 110. The primary station 100 comprises a data source 102 which provides a data stream for transmission to the secondary station 110. This stream is divided by a serial to parallel converter (S/P) 104 to generate a plurality of data sub-streams which are provided to a transmitter (TX) 106. The transmitter 106 arranges for the data sub-streams to be sent to multiple antennas 108 (labelled 1, 2, 3 and 4 in Figure 1) for transmission from the Base Station (BS) 100 to a Mobile Station (MS) 110. The antennas 108 are assumed to be substantially omni-directional (or designed to give coverage over a sectored cell).

Suitable coding, typically including Forward Error Correction (FEC), may be applied by the BS 100 before serial to parallel conversion. This is known as vertical coding, and has the advantage that coding is applied across all sub-streams. However, problems may arise in extracting the sub-streams since joint decoding is needed and it is difficult to extract each sub-stream individually. As an alternative each sub-stream may be coded separately, a technique known as horizontal coding which may simplify receiver operation. These techniques are discussed for example in the paper "Effects of Iterative Detection and Decoding on the Performance of BLAST" by X Li et al in the Proceedings of the IEEE Globecom 2000 Conference, San Francisco, November 27 to December 1 2000.

If vertical coding is used the FEC which is applied must have sufficient error-correcting ability to cope with the entire MIMO channel, which comprises a plurality of paths. It will be appreciated that the set of paths between BS 100 and MS 110 will typically include direct paths and indirect paths, the latter being where signals are reflected by one or more scatterers.

The MS 110 comprises a plurality of antennas 118 (labelled A, B, C and D in Figure 1). Signals received by the antennas 118 are provided to a receiver (RX) 116, which extracts the plurality of transmitted data sub-streams from the received signals. The data sub-streams are then recombined by a parallel to serial converter (P/S) 114 and provided to a data output block 112. Although both the BS 100 and MS 110 are shown as having the same number of antennas, this is not necessary in practice and the numbers of antennas can be optimised depending on space and capacity constraints.

In the simplest implementation of a BS 100, each data sub-stream is mapped to a separate antenna 108. Such an implementation is appropriate for spatially uncorrelated radio channels. In the general case, for which a suitable BS 100 is illustrated in Figure 2, each data sub-stream could be sent to each antenna 108 after applying a complex weight 202 (with one weight value per antenna 108 for each data sub-stream). This approach can be used to map each data sub-stream to a different antenna beam. The antenna beams may be aimed in predetermined directions, or the directions may be determined dynamically to take advantage of changing radio channel conditions. An example of a MIMO system with dynamically changing beam directions is disclosed in our co-pending unpublished United Kingdom patent application 0102316.7 (published as WO02061969, Applicant's reference PHGB010012). A special case of interest is where each data stream is mapped to a subset of the antennas (i.e. some of the weights are zero).

For simplicity, the following embodiments use the simplest case of a one-to-one mapping between data sub-streams and antennas 108, but it will be appreciated that the present invention is not limited to such a scenario.

The capacity improvements promised by a MIMO arrangement have been shown to be achievable in a Gaussian channel even in an open-loop arrangement, where the transmitter (BS 100) has no knowledge of the downlink channel properties. Some capacity improvement may also be achieved in an open-loop arrangement in a Rayleigh fading channel, although the improvement is reduced if the difference between the received Signal to Interference and Noise Ratios (SINRs) from each transmitter antenna 108 (after receive-diversity combining at the MS 110) is large.

A closed-loop scheme may provide additional benefits. The amplitude of the transmissions from the different BS antennas 108 may be weighted so that the transmitter power is directed to the antennas 108 which have the best received SINR at the MS 110. When the BS antennas 108 are being used in a space-time coded MIMO system, with different data being transmitted from each antenna, then the data rate from each antenna may be adjusted as well as the power, as disclosed for example in our co-pending unpublished International patent application PCT/EP01/13690 (published as WO0245293, Applicant's reference PHGB 000168). In the following discussion, it is assumed that the total combined transmit power from all antennas is limited.

In some situations, especially where the difference in channel gain from the different transmit antennas is very large (for example when one or more antennas are in a deep fade), the best radio link capacity may be achieved by switching off one or more of the BS antennas 108 altogether (i.e. reducing power or data rate to zero). Such a strategy of closed-loop antenna selection diversity transmission also has other advantages, such as reducing the number of antennas required at the MS 110.

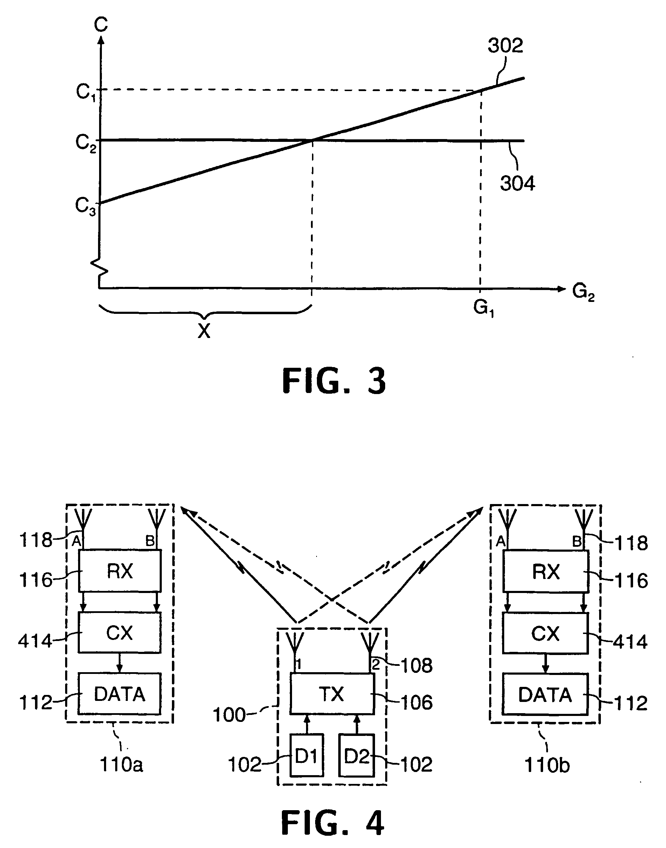

Figure 3 is a graph showing a rudimentary comparison between the available capacity C as a function of the channel gain $G_2$ for the second transmitter antenna 108 for a given value of channel gain $G_1$ for the first transmitter antenna. The graph shows capacities achievable using an open-loop space-time coded MIMO system 302 and a closed-loop transmitter antenna selection scheme 304 for the case of two transmitter antennas 108 at the BS 100 and two receiver antennas 118 at the MS 110. Note that the channel gain with the antenna selection scheme is calculated after receive-diversity combining has been performed at the MS 110.

It was assumed in the derivation of Figure 3 that the total available transmit power is a constant, $P_{tx}$. Thus when $G_2 = G_1$, in the open-loop MIMO case $P_{tx}/2$ is transmitted from each of the BS antennas 108, but in the antenna-selection case $P_{tx}$ is transmitted from one antenna and no power from the other antenna. Note that the choice of transmitter antenna 108 in the antenna-selection case is arbitrary when $G_2 = G_1$, and the capacity $C_1$ in this situation is greater than $C_2$ due to the MIMO gain. However, when $G_2 = 0$ the capacity in the open-loop MIMO case is much reduced to $C_3$ as half of the transmitter power is being transmitted from a useless antenna 108, whereas the capacity remains constant in the closed-loop antenna-selection case.

Thus it can be seen from Figure 3 that in the region marked "X" it is beneficial to use closed-loop antenna-selection rather than an open-loop MIMO scheme.

In known MIMO systems, downlink signals to one MS 110 in a cell are distinguished from those for other MSs 110 by means of frequency (Frequency Division Multiple Access, FDMA) and/or timeslot (Time Division Multiple Access, TDMA) and/or code (Code Division Multiple Access, CDMA), thereby defining the channel for that MS 110. For a given MS, all available BS transmit antennas 108 are then used on the channel for that MS 110. However, in the case described above, where the optimal transmission scheme would be one of transmit antenna selection, the capacity of the system is sub-optimal as certain antennas are not useful for transmission on certain channels.

Hence, in a system made in accordance with the present invention, a channel for a particular MS 110 may also be defined in whole or in part by the subset of BS antennas 108 from which the channel is transmitted, where the subset of BS antennas 108 may consist of one or more antennas. Such a scheme may be termed "Antenna-Division Multiple Access" (ADMA).

A simple example of an embodiment of the present invention is illustrated in Figure 4, comprising a BS 100 having two antennas 108 and two MSs 11 0a, 110b, each comprising two antennas 118. The BS 100 comprises two data sources 102 (D1 and D2), each providing a data sub-stream intended for a different MS 110 to a transmitter (TX) 106. A practical system employing the present invention is likely to include a larger number of MSs and larger numbers of antennas.

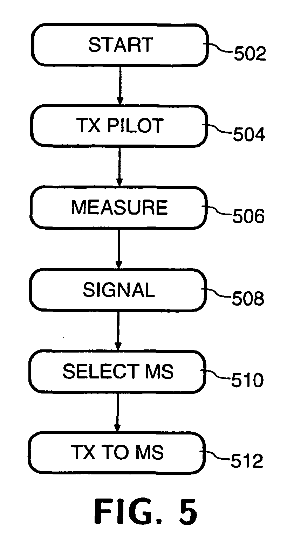

Initial operation of such a system will now be described with reference to the flow chart shown in Figure 5. The operation starts, at step 502, with the BS 100 signalling to the first MS 110a that there is data for transmission. The BS 100 then, at step 504, transmits signals from each of its antennas 108 to enable the first MS 110a to characterise the radio channel. Such signals could for example comprise orthogonal sequences of known pilot information transmitted from each BS antenna 108. The MS 110a measures, at step 506, the SINR of the respective received signals (after diversity combining of the signals received from each antenna 118). In this example, the first MS 110a thereby determines that the SINR of the signal received from antenna 1 of the BS 110 is greater than the SINR of the signal received from Antenna 2 of the BS.

After the measurements have been completed, the MS 110a sends, at step 508, a signalling message to the BS 100 to indicate that antenna 1 gives the best SINR. This message could take a number of forms, for example:

- the identity of the best and/or worst BS antenna(s) 108;
- absolute SINR measurements for the best and/or worst BS antenna(s) 108; or
- absolute SINR measurements for each BS antenna 108.

As a result of this signalling message, the BS determines that data destined for the first MS 110a should be transmitted only from antenna 1. Antenna 2 of the BS 100 may therefore be used to transmit data destined for a different MS, using the same frequency, timeslots and channelisation codes as are being used from antenna 1 for the first MS 110a. A second MS 110b is therefore identified, at step 510, using the same protocol as described above, for which antenna 2 gives the best SINR. Signals are then transmitted to the first MS 110a from antenna 1 and to the second MS 110b from antenna 2 at step 512. These transmission routes are indicated by the solid arrows in Figure 4, the dashed arrows indicating that signals intended for one MS 110a, 110b may reach the other MS since both mobiles are in the coverage area of both antennas 108.

If each MS 110a, 110b has at least as many antennas as the BS 100 and the radio channel contains sufficient scatterers to cause the transfer function of the channel to be substantially different between each BS transmit antenna 108 and each receive antenna 118 of a particular MS 110, then each MS can decode the signal from its corresponding BS antenna 108 without the signals from the other BS antennas causing undue interference.

For example, in the scenario just described, the signals received at the two antennas 108 of the first MS 110a are given by

$$\begin{pmatrix} r_1 \\ r_2 \end{pmatrix} = \begin{pmatrix} h_{11} & h_{21} \\ h_{12} & h_{22} \end{pmatrix}\begin{pmatrix} t_1 \\ t_2 \end{pmatrix}$$

where $r_i$ is the signal received at the $i^{th}$ MS antenna 118, $t_i$ is the signal transmitted by the $i^{th}$ BS antenna 108, $h_{ij}$ is the complex channel transfer characteristic from the $i^{th}$ BS antenna 108 to the $j^{th}$ MS antenna 118.

$t_1$ corresponds to the signal transmitted from BS antenna 1, which is the wanted signal for the first MS 110a. This signal can therefore be extracted, in a channel extraction (CX) block 414, as:

$$t_1 = \frac{h_{22}r_1 - h_{21}r_2}{h_{11}h_{22} - h_{12}h_{21}}$$

The channel transfer coefficients $h_{ij}$ are determined using known pilot information, as discussed above. The frequency with which the pilot information needs to be transmitted and the channel transfer coefficients updated will depend on the coherence time of the channel. The known pilot information should be transmitted with enough energy for a sufficiently accurate estimation of the channel transfer coefficients to be obtained in the presence of noise. The energy of the known pilot information can be increased by transmitting a longer pilot information sequence or by increasing the transmission power of the pilot information. The length of each sequence of known pilot information on which each estimate of channel transfer coefficients is based should be significantly less than the coherence time of the channel. Other known techniques, such as joint detection and interference cancellation, may also be used by the MS 110 to extract the desired signal from the signals received from the BS antennas 108.

In practice, the received signals $r_1$ and $r_2$ will also include noise terms. The transmitted signals can then be recovered via a range of known methods, for example Minimum Mean Square Error (MMSE) or Maximum Likelihood Sequence Estimation (MLSE), as described for example in Chapter 16 of "Antennas and Propagation for Wireless Communication Systems" by S R Saunders, published by John Wiley and Sons in 1999. MMSE may be used as part of the MLSE process, or may be used on its own. In the latter case, no a priori knowledge is assumed about the possible sequences of transmitted bits.

In a practical system, with a larger number of MSs 110, it is unlikely to be desirable to use ADMA as the only means of distinguishing channels intended for different MSs, as this would require every MS 110 to have at least as many antennas 118 as the total number of MSs in a cell. A typical scheme would therefore be to use ADMA as an additional means of optimising the use of the radio resources in conjunction with another multiple access scheme such as CDMA, FDMA or TDMA. ADMA could then be used on a given code / frequency / timeslot to distinguish channels to $n$ different MSs, where $n$ is equal to the smallest number of antennas on any of the MSs using that combination of code, frequency and timeslot. For example, a pair of MSs each with two antennas could use ADMA to share a downlink channel defined by a particular frequency and/or timeslot and/or code.

In some embodiments of the present invention, a MS 110 may not require as many antennas as suggested above. In the example of a pair of MSs above, if signal from one BS antenna 108 is so weak that it can be considered as noise, only one antenna 118 would be required. However, this requires particular channel conditions and so may not always be relied on. Our co-pending unpublished United Kingdom patent application 0115937.5 (published as WO03003604, applicant's reference PHGB 010100) discloses a MIMO system in which a MS 110 may have fewer antennas than the number of sub-streams directed at it. Such a system employs sampling techniques to generate sufficient substantially uncorrelated received signal samples to enable the sub-streams to be extracted. One particularly favoured embodiment of this system employs code division techniques to transmit the signals and a Rake receiver in the MS 110 to determine the received signal samples. Such techniques could also be applied to the present invention, thereby relaxing the requirements on the number of MS antennas 118.

A system made in accordance with the present invention provides increased downlink capacity over a conventional system by using all the available BS antennas 108 in an optimal way. In a practical system, it is clearly likely that the best BS antennas 108 for each of a number of MSs may sometimes coincide. In this case, a MMSE approach may be taken across the MS space to allocate antennas 108 to the MSs 110 in a way which is optimal for the system as a whole.

Embodiments of the present invention may make use of a single antenna structure having a dual polarisation capability, which can be used so as to be functionally equivalent to two antennas. Other structures, for example printed circuit board metallisation, may be used to provide functionality equivalent to an antenna.

MIMO techniques for transmission to individual MSs 110 may also be used in a system made in accordance with the present invention, as it is still possible to assign a plurality of BS antennas 108, being a subset of the total number of BS antennas, to a particular MS 110. Further, the use of ADMA for at least one data channel to each of a plurality of MSs 110 does not preclude the simultaneous transmission of one or more other data channels to one or more of the same MSs 110 by means of other multiple access techniques, for example code division or frequency division.

In the above description, the term 'Base Station' or 'Primary Station' relates to an entity which may in practice be distributed between a variety of parts of the fixed infrastructure. In a UMTS system, for example the functions of a BS 100 are carried out in a "Node B", which is the part of the fixed infrastructure directly interfacing with a MS 110, and at a higher level in the Radio Network Controller (RNC). As well as their use in transmission of data from a BS 100 to a plurality of MSs 110, the techniques described may also be used in the reverse direction (for example during UMTS soft handover). In this case, the roles of the BS 100 and MS 110 would be reversed in the description above, with the BS 100 adopting the role of a secondary station and the MS 110 the role of a primary station.

From reading the present disclosure, other modifications will be apparent to persons skilled in the art. Such modifications may involve other features which are already known in the design, manufacture and use of radio communication systems and component parts thereof, and which may be used instead of or in addition to features already described herein. The subject-matter, whose protection is sought, is defined in the appended claims.

**Claims**

1. A primary station (100) having at least two antennas (108) for use in a radio communication system having at least two secondary stations (110a, 110b), wherein means are provided for transmitting respective communication channels between the primary station and first and second secondary stations from respective subsets of the primary station's antennas, wherein the first and second secondary stations are in the coverage area of the primary station antennas in both subsets, **characterized in that** the respective subsets are mutually exclusive, wherein the respective channels are distinguished solely by the respective subsets of antennas.

2. A primary station as claimed in claim 1, **characterized in that** means are provided for transmitting known signals from each of the antennas comprised in the subsets, thereby enabling a secondary station to characterize the radio channels between the primary station antennas and the secondary station antennas.

3. A primary station as claimed in claim 1 or 2, **characterized in that** means are provided for receiving signals from the secondary stations providing information on the quality of received signals and for making use of the information to determine which antennas to assign to each subset.

4. A radio communication system comprising: a primary station according to claim 1, and at least two secondary stations each having at least one antenna, wherein the first and second secondary stations each comprise means for estimating from the received signals the subset of signals comprising its respective communication channel.

5. A radio communication system as claimed in claim 4, **characterized in that** one of the subsets of the primary station's antennas comprises at least two antennas, and **in that** multiple input multiple output techniques are used in transmissions from this subset to its respective secondary station.

6. A radio communication system as claimed in claim 4 or 5, **characterized in that** the system comprises a further communication channel between the primary station and one of the secondary stations, which channel is not solely distinguished by a subset of antennas from which it is transmitted.

7. A secondary station (110a) having at least one antenna (118) for use in a radio communication system having respective communication channels between a primary station (100) having at least two antennas (108), the secondary station and a further secondary station (110b), wherein the communication channels are transmitted from respective subsets of the primary station's antennas, wherein the secondary station and the further secondary station are in the coverage area of the primary station antennas in both subsets, **characterized in that** the respective subsets are mutually exclusive, wherein the respective channels are distinguished solely by the respective subsets of antennas, and wherein means (414) are provided for estimating from the received signals the subset of signals comprising the secondary station's respective communication channel.

8. A secondary station as claimed in claim 7, **characterized in that** the estimating means comprises means for resolving the signals comprising its respective communication channel separately from signals transmitted from primary station antennas not comprised in its respective subset of antennas.

9. A secondary station as claimed in claim 7 or 8, **characterized by** comprising at least as many antennas as the total number of primary station antennas comprised in the mutually exclusive subsets which transmit channels having no distinguishing features other than the respective subset of antennas.

10. A secondary station as claimed in any one of claims 7 to 9, **characterized in that** means are provided for characterizing at least one radio channel using signals transmitted by the primary station and for signaling the results of the characterization to the primary station.

11. A method of operating a radio communication system comprising a primary station (100) having at least two antennas (108) and at least two secondary stations (110a, 110b) each having at least one antenna (118), the method comprising the primary station transmitting respective communication channels between the primary is station and first and second secondary stations from respective subsets of the primary station's antennas, the first and second secondary stations both being in the coverage area of the primary station antennas in both subsets, **characterized by** the respective subsets being mutually exclusive and the respective channels being distinguished solely by the respective subsets of antennas, the method further comprising each secondary station estimating from the received signals the subset of signals comprising its respective communication channel.

## Patentansprüche

1. Primärstation (100) mit wenigstens zwei Antennen (108) zur Verwendung in einem Funkkommunikationssystem mit wenigstens zwei Sekundärstationen (110a, 110b), wobei Mittel zum Übertragen betreffender Kommunikationskanäle zwischen der Primärstation und der ersten und der zweiten Sekundärstation von betreffenden Subsätzen der Antennen der Primärstation vorgesehen sind, wobei die erste und die zweite Sekundärstation in dem Deckungsgebiet der Antennen in den beiden Subsätzen der Primärstation liegen, **dadurch gekennzeichnet, dass** die betreffenden Subsätze untereinander exklusiv sind, wobei die betreffenden Kanäle nur durch die betreffenden Subsätze von Antennen unterschieden werden.

2. Primärstation nach Anspruch 1, **dadurch gekennzeichnet, dass** Mittel vorgesehen sind zum Übertragen bekannter Signale von jeder der in den Subsätzen vorhandenen Subsätze, wodurch es ermöglicht wird, dass eine Sekundärstation die Funkkanäle zwischen den Antennen der Primärstation und den Antennen der Sekundärstation kennzeichnet.

3. Primärstation nach Anspruch 1 oder 2, **dadurch gekennzeichnet, dass** Mittel vorgesehen sind zum Empfangen von Signalen von den Sekundärstationen, die Information über die Qualität empfangener Signale liefert und zum Verwenden der Information um zu ermitteln, welche Antennen jedem Subsatz zugeordnet werden.

4. Funkkommunikationssystem, das Folgendes umfasst: eine Primärstation nach Anspruch 1, und wenigstens zwei Sekundärstationen, die je wenigstens eine Antenne aufweisen, wobei die erste und die zweite Sekundärstation je Mittel aufweisen um aus den empfangenen Signalen denjenigen Subsatz von Signalen zu schätzen, der den betreffenden Kommunikationskanal enthält.

5. Funkkommunikationssystem nach Anspruch 4, **dadurch gekennzeichnet, dass** einer der Subsätze der Antennen der Primärstation wenigstens zwei Antennen aufweist, und dass Mehrfach-Ein-Mehrfach-Aus-Techniken bei Übertragungen von diesem Subsatz zu der betreffenden Sekundärstation angewandt werden.

6. Funkkommunikationssystem nach Anspruch 4 oder 5, **dadurch gekennzeichnet, dass** das System einen weiteren Kommunikationskanal zwischen der Primärstation und einer der Sekundärstationen aufweist, wobei dieser Kanal nicht nur durch einen Subsatz von Antennen sich unterscheidet, von denen er übertragen wird.

7. Sekundärstation (110a) mit wenigstens einer Antennen (118) zur Verwendung in einem Funkkommunikationssystem mit betreffenden Kommunikationskanälen zwischen einer Primärstation (100) mit wenigstens zwei Antennen (108), der Sekundärstation und einer weiteren Sekundärstation (110b), wobei die Kommunikationskanäle von betreffenden Subsätzen der Antennen der Primärstation übertragen werden, wobei die Sekundärstation und die weitere Sekundärstation in dem Deckungsgebiet der Antennen in den beiden Subsätzen der Primärstation liegen, **dadurch gekennzeichnet, dass** die betreffenden Subsätze untereinander exklusiv sind, wobei die betreffenden Kanäle nur durch die betreffenden Subsätze von Antennen unterschieden werden, und wobei Mittel (414) vorgesehen sind um aus den empfangenen Signalen den Subsatz von Signalen mit dem betreffenden Kommunikationskanal der Sekundärstation zu schätzen.

8. Sekundärstation nach Anspruch 7, **dadurch gekennzeichnet, dass** die Schätzmittel Mittel aufweisen zum Auflösen der Signale, die den betreffenden Kommunikationskanal aufweisen, separat von den von den Antennen der Primärstation übertragenen Signalen, die nicht in dem betreffenden Subsatz von Antennen vorgesehen sind.

9. Sekundärstation nach Anspruch 7 oder 8, **dadurch gekennzeichnet, dass** sie wenigstens so viele Antennen wie die gesamte Anzahl Primärstationsantennen in den untereinander exklusiven Subsätzen aufweist, wobei die Übertragungskanäle keine unterscheidenden Merkmale anders als den betreffenden Subsatz von Antennen aufweisen.

10. Sekundärstation nach einem der Ansprüche 7 bis 9, **dadurch gekennzeichnet, dass** Mittel vorgesehen sind zum Kennzeichnen wenigstens eines Funkkanals, unter Verwendung von Signalen, die von der Primärstation übertragen werden und zum Signalisieren der Ergebnisse der Kennzeichnung an die Primärstation.

11. Verfahren zum betreiben eines Funkkommunikationssystems mit einer Primärstation (100) mit wenigstens zwei Antennen (108) und wenigstens zwei Sekundärstationen (110a, 110b), die je wenigstens eine Antenne (118) aufweisen, wobei das Verfahren umfasst, dass die Primärstation betreffende Kommunikationskanäle zwischen der Primärstation und der ersten und der zweiten Sekundärstation von betreffenden Subsätzen der Antennen der Primärstation überträgt, wobei die erste und die zweite Sekundärstation beide in dem Deckungsgebiet der Antennen der Primärstation in den beiden Subsätzen liegen, **dadurch gekennzeichnet, dass** die betreffenden Subsätze untereinander exklusiv sind und wobei die betreffenden Kanäle nur durch die betreffenden Subsätze von Antennen unterschieden werden, wobei das Verfahren weiterhin umfasst, dass jede Sekundärstation aus den empfangenen Signalen den Subsatz von Signalen schätzt, die den betreffenden Kommunikationskanal enthält.

## Revendications

1. Station primaire (100) ayant au moins deux antennes (108) pour utilisation dans un système de radiocommunication ayant au moins deux stations secondaires (110a, 110b), dans laquelle des moyens sont fournis pour émettre sur des canaux de communication respectifs entre la station primaire et les première et deuxième stations secondaires à partir de sous-ensembles respectifs des antennes de la station primaire, dans lequel les première et deuxième stations secondaires se trouvent dans la zone de couverture des antennes de station primaire dans les deux sous-ensembles, **caractérisée en ce que** les sous-ensembles respectifs sont mutuellement exclusifs, dans laquelle les canaux respectifs sont uniquement différenciés par les sous-ensembles d'antennes respectifs.

2. Station primaire selon la revendication 1, **caractérisée en ce que** des moyens sont fournis pour émettre des signaux connus à partir de chacune des antennes comprises dans les sous-ensembles, permettant ainsi à une station secondaire de caractériser les canaux radio entre les antennes de station primaire et les antennes de station secondaire.

3. Station primaire selon la revendication 1 ou 2, **caractérisée en ce que** des moyens sont fournis pour recevoir des signaux des stations secondaires fournissant des informations sur la qualité de signaux reçus et pour utiliser les informations pour déterminer quelles antennes assigner à chaque sous-ensemble.

4. Système de radiocommunication comprenant: une station primaire selon la revendication 1, et au moins deux stations secondaires, chacune ayant au moins une antenne, dans lequel les première et deuxième stations secondaires comprennent chacune des moyens pour estimer à partir des signaux reçus le sous-ensemble de signaux comprenant son canal de communication respectif.

5. Système de radiocommunication selon la revendication 4, **caractérisé en ce qu'**un des sous-ensembles des antennes de station primaire comprend au moins deux antennes, et **en ce que** des techniques d'entrées multiples sorties multiples sont utilisées dans des émissions à partir de ce sous-ensemble vers sa station secondaire respective.

6. Système de radiocommunication selon la revendication 4 ou 5, **caractérisé en ce que** le système comprend un autre canal de communication entre la station primaire et une des stations secondaires, ce canal n'étant pas uniquement différencié par un sous-ensemble d'antennes émettant sur lui.

7. Station secondaire (110a) ayant au moins une antenne (118) pour utilisation dans un système de radiocommunication ayant des canaux de communication respectifs entre une station primaire (100) ayant au moins deux antennes (108), la station secondaire et une autre station secondaire (110b), dans laquelle on émet sur les canaux de communication à partir de sous-ensembles respectifs des antennes de la station primaire, dans laquelle la station secondaire et l'autre station secondaire se trouvent dans la zone de couverture des antennes de station primaire dans les deux sous-ensembles, **caractérisée en ce que** les sous-ensembles respectifs sont mutuellement exclusifs, dans laquelle les canaux respectifs sont uniquement différenciés par les sous-ensembles respectifs d'antennes, et dans laquelle des moyens (414) sont fournis pour estimer à partir des signaux reçus le sous-ensemble de signaux comprenant le canal de communication respectif de station secondaire.

8. Station secondaire selon la revendication 7, **caractérisée en ce que** les moyens d'estimations comprennent des moyens pour résoudre les signaux comprenant son canal de communication respectif séparément de signaux émis à partir d'antennes de station primaire non comprises dans son sous-ensemble respectif d'antennes.

9. Station secondaire selon la revendication 7 ou 8, **caractérisée en ce qu'**elle comprend au moins autant d'antennes que le nombre total d'antennes de station primaire comprises dans les sous-ensembles mutuellement exclusifs qui émettent sur des canaux n'ayant pas de caractéristiques de différenciation autres que l'ensemble respectif d'antennes.

10. Station secondaire selon l'une quelconque des revendications 7 à 9, **caractérisée en ce que** des moyens sont fournis pour caractériser au moins un canal radio en utilisant des signaux émis par la station primaire et pour signaler les résultats de la caractérisation à la station primaire.

**11.** Procédé d'utilisation d'un système de radiocommunication comprenant une station primaire (100) ayant au moins deux antennes (108) et au moins deux stations secondaires (110a, 110b), chacune ayant au moins une antenne (118), le procédé comprenant l'émission par la station primaire sur des canaux de communication respectifs entre la station primaire et les première et deuxième stations secondaires à partir de sous-ensembles respectifs des antennes de la station primaire, les première et deuxième stations secondaires se trouvant toutes deux dans la zone de couverture des antennes de station primaire dans les deux sous-ensembles, **caractérisé en ce que** les sous-ensembles respectifs sont mutuellement exclusifs et **en ce que** les canaux respectifs sont seulement différenciés par les sous-ensembles respectifs d'antennes, le procédé comprenant de plus une estimation par chaque station secondaire à partir des signaux reçus du sous-ensemble de signaux comprenant son canal de communication respectif.

# FIG. 1

# FIG. 2

**FIG. 3**

**FIG. 4**

```
          ┌─────────────────┐
          │      START      │──502
          └─────────────────┘
                   │
                   ▼
          ┌─────────────────┐
          │    TX PILOT     │──504
          └─────────────────┘
                   │
                   ▼
          ┌─────────────────┐
          │    MEASURE      │──506
          └─────────────────┘
                   │
                   ▼
          ┌─────────────────┐
          │     SIGNAL      │──508
          └─────────────────┘
                   │
                   ▼
          ┌─────────────────┐
          │    SELECT MS    │──510
          └─────────────────┘
                   │
                   ▼
          ┌─────────────────┐
          │    TX TO MS     │──512
          └─────────────────┘
```

# FIG. 5

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 0171843 A
- US 6067290 A
- US 6151310 A
- GB 0102316 A
- WO 02061969 A
- EP 0113690 W
- WO 0245293 A
- GB 0115937 A
- WO 03003604 A

### Non-patent literature cited in the description

- V-BLAST: an architecture for realising very high data rates over the rich-scattering wireless channel. **P W WOLNIANSKY et al.** URSI International Symposium on Signals, Systems and Electronics. 29 September 1998
- **X LI et al.** Effects of Iterative Detection and Decoding on the Performance of BLAST. *Proceedings of the IEEE Globecom 2000 Conference,* 27 November 2000
- **S R SAUNDERS.** Antennas and Propagation for Wireless Communication Systems. John Wiley and Sons, 1999